# EUROPÄISCHE PATENTSCHRIFT

(11) **EP 1 038 848 B1**
(45) Veröffentlichungstag und Bekanntmachung des Hinweises auf die Patenterteilung: **21.08.2002**
(21) Anmeldenummer: 00102851.3
(22) Anmeldetag: 11.02.2000
(51) Int. Cl.: C03C 17/00, C03C 8/14

(54) **Verfahren zur Herstellung von Dekoren**
Method for producing decorations
Méthode de fabrication de décorations

(30) Priorität: 22.03.1999 DE 19912914
(43) Veröffentlichungstag der Anmeldung: 27.09.2000
(73) Patentinhaber: Schott Glas, 55122 Mainz (DE)
(72) Erfinder: Cotlear de Witzmann, Monica, 55268 Nieder-Olm (DE); Auchter-Krummel, Petra, 55578 Vendersheim (DE); Weinberg, Waldemar, 25368 Kiebitzreihe (DE); Campbell, Dave, Vincennes IN 47591 (US)

(56) Entgegenhaltungen:
- DE-A- 2 841 287
- DE-A- 4 422 338
- DE-C- 19 728 881
- US-A- 5 110 835

## Beschreibung

Die Erfindung betrifft ein Verfahren zur Herstellung von in ihrem optischen Erscheinungsbild fehlerfreien, eingebrannten Dekoren auf Unterlagen aus Glas, Glaskeramik oder Keramik mit üblichen Dekorfarben aus Grundemail, Pigmenten und Additiven.

Als Unterlagen oder Substrate können dabei Kalk-Natron-Gläser, Borosilikatgläser, Glaskeramiken, Porzellan, Steingut, Steinzeug, Email und alle Unterlagen auf denen ein Dekor aus keramischen Farben aufgebracht werden soll, wie beispielsweise auch Papier als Zwischenträger (für Abziehbilder) Verwendung finden.

Eine solche Glaskeramik ist beispielsweise in der europäischen Patentschrift EP 0 220 333 B1 beschrieben.

Zur Dekoration insbesondere von Glas und Glaskeramiken, werden keramische Farben eingesetzt. Diese bestehen üblicherweise aus einer oder mehreren glasigen Substanzen (Grundemail oder Glasfluß) und einer Zumischung von einem oder mehreren Pigmenten (Farbkörpern).

Keramische Farben werden üblicherweise durch Mischen von Fritten (abgeschreckten Glasflüssen) und den anorganischen Pigmenten hergestellt. Das Mischen kann dabei bereits während des Schmelzvorgangs der Glasflüsse erfolgen (Einfritten) oder aber vor oder während eines anschließenden Mahlvorgangs der abgeschreckten Glasmasse. Die einsatzfähigen keramischen Farben liegen dann als pulverförmige Gemische aus Farbkörpern und Gläsern vor. Die aus Metalloxiden bestehenden Farbkörper sind bis zu einem gewissen Grade in den Glasschmelzen löslich. In der Regel nimmt die Löslichkeit der Farbkörper mit steigender Temperatur der Glasschmelze zu.

Zur Dekorierung insbesondere von Glas- bzw. Glaskeramikgegenständen, welche in der Regel schon fertig geformt vorliegen, wird das Farbpulver auf verschiedene Arten auf das zu beschichtende Substrat aufgebracht. Das Pulver kann in mittleren Teilchendurchmessern von weniger als 1 µm bis zu 40 µm vorliegen.

Zur Fixierung der keramischen Farben vor dem Einbrand werden sie in dünnbis zähflüssigen Auftragshilfsmitteln dispergiert, die sich teils beim Trocknen der aufgebrachten Farben, teils beim Brennen verflüchtigen. Beispiel hierfür sind das Vermischen mit Siebdruckölen und der folgende direkte Siebdruck oder der indirekte (Abziehbildverfahren), das Vermischen mit thermoplastischem Material und der folgende Siebdruck unter Wärmeeinwirkung.

Zum Erhalt der Gebrauchstüchtigkeit der zu dekorierenden Gegenstände, müssen die auf das Substrat aufgetragenen Schichten durch Einbrennen zu einer festen Einheit mit dem Substrat verschmolzen werden. Beim Erhitzen schmilzt das Glaspulver und bildet eine kompakte Schicht, in welcher die Farbkörperteilchen eingebettet sind.

Solche Glaszusammensetzungen zum Glasieren, Emaillieren und Dekorieren, insbesondere auch von Gläsern oder Glaskeramiken, sind beispielsweise aus den deutschen Patentschriften DE 42 01 286 C2, DE 42 41 411 C2 und DE 197 21 737 C1 bekannt.

Bei der Dekoration von Unterlagen, insbesondere von Gläsern und Glaskeramiken, beispielsweise mittels Siebdruck ist die Erkennbarkeit von Fehlern stets ein schwieriges Thema. Je dünner die Dekorschicht ist und je feiner das Raster, desto schwieriger lassen sich Fehlstellen sehen und erkennen, bevor die Dekorschicht eingebrannt ist. In der Folge müssen nach dem Einbrand Fehldrucke entsorgt werden, die andernfalls vor dem Einbrand leicht ausgewaschen und neubedruckt werden könnten, mit der Folge einer wesentlichen Ausbeuteerhöhung.

Bei der Dekoration von Glaskeramiken entstehen sehr dünne rohe Schichten (ca 8 - 10 µm), deren Kontrast zum Träger, insbesondere z B bei einer Glaskeramik nach dem europäischen Patent EP 0 220 333 B1, relativ gering ist.

Als Abhilfe für diese Problematik wurden in der Vergangenheit organische Färbemittel zugesetzt, die in der Porzellan- und keramischen Industrie bereits seit längerer Zeit, insbesondere bei der Einfärbung keramischer Massen, Anwendung finden: z. B. Sudan® der BASF. Solche Zusätze sind bekannt in den Färbungen rot, gelb und blau und haben die Eigenschaft, bei ca. 500 °C vollkommen rückstandsfrei zu verbrennen, so daß das Endprodukt keinen Nachteil davonträgt.

Einige Ausführungen von Dekoren haben jedoch so extrem feine und dabei dichte Rasterungen (z. B. Punktdurchmesser 0,5 mm), daß der Kontrast z. B. mittels Sudan®-Färbung nicht ausreicht, um Fehldrucke vor dem Einbrand sicher zu erkennen.

Aus der deutschen Offenlegungsschrift DE 44 22 338 A1 sind Schmelzklebstoffe bekannt, die einen nachweisbaren Gehalt mindestens einer UV-aktiven Substanz als markierenden Stoff enthalten. Diese UV-aktiven Substanzen sind optische Aufheller, insbesondere Thiophen-Benzoxazol-Derivate.

Die deutsche Schrift DE 40 24 871 A1 legt antistatisch ausgerüstete Styrolpolymerisate offen, die übliche im UV-Bereich absorbierende Fluoreszenzfarbstoffe, wie optische Aufheller vom Typ Uvitex®OB der Fa. CIBA, also Thiophen-Benzoxaxol-Derivate, enthalten.

Die deutsche Patentschrift DE 35 05 922 C1 befaßt sich mit einem Verfahren zum Dekorieren von Glaskeramikplatten, bei dem die Dekorfarben vor dem Keramisieren aufgebracht werden und das Keramisieren sowie das Farbeinbrennen gleichzeitig durchgeführt wird.

Die deutsche Patentschrift DE 197 28 881 C1 beschreibt mit keramischen Farben dekorierte Glaskeramikartikel.

Aus keinem der vorgenannten Dokumente ist die Verwendung eines UVsensiblen optischen Aufhellers als Additiv in einer Dekorfarbe beschrieben

Aufgabe der vorliegenden Erfindung war daher ein Verfahren zur Herstellung von nach dem Brand auch in ihrem optischen Erscheinungsbild fehlerfreien Dekoren zu entwickeln, bei dem auch bei extrem fein gerasterten Dekoren bereits vor dem Brand Abweichungen vom "Ideal"-Dekor durch einen unter UV-Bestrahlung leuchtkräftigen Farbeindruck und durch den hohen Kontrast zur Unterlage leicht und sicher erkannt werden können.

Weiter waren Aufgaben der Erfindung die Gebrauchseigenschaften der gebrannten oder keramisierten dekorierten Unterlagen in keiner Weise negativ zu beeinträchtigen und keine toxikologisch problematischen Reaktions- oder Spaltprodukte durch das erfindungsgemäße Verfahren zu schaffen.

Diese Aufgaben wurden nach der Erfindung dadurch gelöst, daß als Additive UV-sensible optische Aufheller der Dekorfarbe zugegeben werden.

Insbesondere Thiophen-Benzoxazol-Derivate, und besonders Produkte die 2,2' - (2,5 - Thiophenediyl) - bis (5 - (1.1-dimethylethyl)) - benzoxalat enthalten, werden als optischer Aufheller in die Dekorfarbe zugegeben. Die Zugabe der Additve kann dabei durch Einmischen z. B. in das Siebdrucköl oder Einrühren in die angepastete verarbeitungsfertige Farbe erfolgen.

Nach der Erfindung werden die Additive in feinteiliger Pulverform in Mengen von 0.05 bis 10 Gew.-%, insbesondere in Mengen von 0.1 bis 1 Gew.-% zu der Dekorfarbe zugegeben und homogen eingemischt.

Nach der Erfindung besonders vorteilhaft ist es, daß die Additive UVreflektierende, fluoreszierende Eigenschaften aufweisen. Unter UV-Licht ist oftmals eine Fehlererkennung, sowohl mit dem Auge als auch mit geeigneten Messeinrichtungen wesentlich leichter, weil der Kontrast zum Untergrund erheblich erhöht ist. Der für eine optimale Kontrasterhöhung geeignetste Strahlungsbereich kann dabei in Abhängigkeit von der Unterlage und der Dekorfarbe jedesmal leicht im Vorversuch ermittelt werden.

Nach der Erfindung werden bevorzugt siebdruckgeeignete Dekorfarben im Verfahren verwendet, da bei diesen die höchsten Qualitätsanforderungen auch an Gestaltung und Ausführung der Dekore gestellt werden.

Folgendes Ausführungsbeispiel soll das erfindungsgemäße Verfahren noch näher erläutern:

Zu einer Glaszusammensetzung mit (in Gew.-%) SiO₂ 54,0; A₂O₃ 17,5; B₂O₃ 17.5; Li₂O 3,1; TiO₂ 1,9; ZnO 1,4; ZrO₂ 1,2; Na₂O 1; K₂O 1; SrO 1; MgO 0,4 mit einem Pigmentzusatz von 20 Gew.-%, die durch Naßmahlen auf Korngrößen < 10 µm, bevorzugt 1 - 3 µm gemahlen wurden und mit einem Standardsiebdrucköl angepastet worden waren, werden als Additiv 0.5 Gew.-% Uvitex® OB der Firma CIBA Spezialitätenchemie GmbH, Lampertheim in feinteiliger Form im Rührer homogen etwa 10 Minuten eingemischt.

Die so zubereitete Dekorfarbe wurde anschließend im Siebdruck in üblicher Weise auf eine noch nicht keramisierte Glasplatte aufgebracht und getrocknet.

Trotz sehr filigraner und dichter Dekorstrukturen konnte bei der Qualitätskontrolle des Dekors vor der Keramisierung unter UV-Licht jede noch so kleine Abweichung vom "Ideal"-Dekor und jede Fehlstelle des Dekors visuell problemlos identifiziert werden.

Wird dann ein Dekorfehler festgestellt, so kann nun vor dem Keramisieren die Platte leicht wieder vom Dekor durch Abwaschen befreit und die Platte erneut dekoriert werden.

In der praxisnahen Versuchsproduktion mit besonders schwierigen Dekorrastern, z. B. sehr kleine, gleichmäßige Punktraster auf großen Flächen, konnte durch dieses erfindungsgemäße Verfahren der Ausschuß von dekorierten und keramisierten Platten, die früher verworfen werden mußten um bis zu 90 % gesenkt werden.

Die nach der Erfindung verwendeten Additive, auch Uvitex® OB der Fa. CIBA Spezialitäten GmbH, finden normalerweise Anwendung als optische Aufheller von Polymeren.

Die hiermit erfindungsgemäß vermischten keramischen Farben wurden insbesondere bei der Dekoration von Glaskeramiken verwendet und anschließend wurde "das fertige Produkt" hinsichtlich der Gebrauchseigenschaften, gemäß üblicher Prüfvorschriften mit positiven Ergebnissen getestet.
Darüber hinaus wurden Untersuchungen hinsichtlich der Verbrennungs- und Crackprodukte durchgeführt und somit sichergestellt, daß die erfindungsgemäßen Konzentrationen der Additive im Farb/Siebdruckölgemisch keine toxikologische Bedeutung haben.

Bei konventioneller Verwendung als Aufheller bei Polymeren erfahren die Substanzen keine thermische Belastung. Bei keramischen Farben dagegen wird der Aufheller zuerst zur Fehlererkennung verwendet und dann rückstandsfrei verbrannt.

## Patentansprüche

1. Verfahren zur Herstellung von in ihrem optischen Erscheinungsbild fehlerfreien, eingebrannten Dekoren auf Unterlagen aus Glas, Glaskeramik oder Keramik mit üblichen Dekorfarben aus Grundemail, Pigmenten und Additiven,
**dadurch gekennzeichnet,**
**daß** als Additive UV-sensible optische Aufheller der Dekorfarbe zugegeben werden, die nach dem Aufdrucken des Dekors auf die Unterlage der Dekorfarbe bei geeigneter UV-Bestrahlung einen leuchtkräftigen Farbeindruck mit so hohem Kontrast zur Unterlage geben, daß Dekorfehler auch bei extrem fein gerasterten Dekoren vor dem Brand erkennbar werden.

2. Verfahren nach Anspruch 1,
**dadurch gekennzeichnet,**
**daß** als Additive Thiophen-Benzoxazol-Derivate zur Dekorfarbe zugegeben werden.

3. Verfahren nach Anspruch 2,
**dadurch gekennzeichnet,**
**daß** als Additiv ein Produkt, das 2,2' - (2,5 - Thiophenediyl) - bis (3 - (1,1-dimethylethyl)) - benzoxazol enthält, zur Dekorfarbe zugegeben wird.

4. Verfahren nach den Ansprüchen 1 bis 3,
**dadurch gekennzeichnet,**
**daß** die Additive in feinteiliger Form in einer Menge von 0.05 bis 10 Gew.-% zur Dekorfarbe zugegeben werden

5. Verfahren nach Anspruch 4,
**dadurch gekennzeichnet,**
**daß** die Additive in einer Menge von 0.1 bis 1.0 Gew.-% zur Dekorfarbe zugegeben werden.

6. Verfahren nach den Ansprüchen 1 bis 5,
**dadurch gekennzeichnet,**
**daß** als Dekorfarben Siebdruckfarben eingesetzt werden.

## Claims

1. Process for producing fired decorations, the visual appearance of which is flawless, on bases made from glass, glass-ceramic or ceramic using standard decoration colours comprising base enamel, pigments and additives, **characterized in that** UV-sensitive optical brighteners are added to the decoration colour as additives, and these brighteners, after the decoration has been printed onto the base, provide the decoration colour, under suitable UV radiation, with a brilliant colour impression with a contrast from the base which is so great that decoration flaws can be recognized prior to firing even in the case of extremely fine decoration patterns.

2. Process according to Claim 1, **characterized in that** thiophene-benzoxazole derivatives are added to the decoration colour as additives.

3. Process according to Claim 2, **characterized in that** a product which contains 2,2' - (2,5 - thiophenediyl) - bis (3 - (1,1 - dimethylethyl)) - benzoxazole is added to the decoration colour as additive.

4. Process according to Claims 1 to 3, **characterized in that** the additives are added to the decoration colour in fine particle form and in an amount of from 0.05 to 10% by weight.

5. Process according to Claim 4, **characterized in that** the additives are added to the decoration colour in an amount of from 0.1 to 1.0% by weight.

6. Process according to Claims 1 to 5, **characterized in that** screen-printing inks are used as decoration colours.

## Revendications

1. Procédé pour la production de décors cuits au four, sans défauts dans leur aspect optique, sur des supports en verre, vitrocéramique ou céramique, à l'aide de couleurs pour décor usuelles constituées d'émail de base, de pigments et d'additifs, **caractérisé en ce qu'**on ajoute en tant qu'additifs à la couleur de décor des azurants optiques sensibles aux rayons UV, qui, après l'application du décor sur le support de la couleur de décor, donnent sous une irradiation UV appropriée une impression colorée intense à contraste tellement élevé par rapport au support que même dans le cas de décors extrêmement finement tramés, des défauts de décor sont décelables avant la cuisson.

2. Procédé selon la revendication 1, dans lequel on ajoute en tant qu'additifs à la couleur de décor des dérivés de thiophène-benzoxazole.

3. Procédé selon la revendication 2, dans lequel on ajoute en tant qu'additif à la couleur de décor un produit qui contient du 2,2'-(2,5-thiophènediyl)-bis(3-(1,1-diméthyléthyl))-benzoxazole.

4. Procédé selon les revendications 1 à 3, **caractérisé en ce que** les additifs sont ajoutés sous forme finement divisée, en une quantité de 0,05 à 10 % en poids, à la couleur de décor.

5. Procédé selon la revendication 4, **caractérisé en ce que** les additifs sont ajoutés en une quantité de 0,1 à 1,0 % en poids, à la couleur de décor.

6. Procédé selon les revendications 1 à 5, **caractérisé en ce qu'**on utilise en tant que couleurs de décor des couleurs pour sérigraphie.
